# DEMANDE DE BREVET EUROPEEN

(11) **EP 1 491 779 A1**
(43) Date de publication de la demande: **29.12.2004**
(21) Numéro de dépôt: 04291400.2
(22) Date de dépôt: 04.06.2004
(51) Int. Cl.: F16C 1/02, F16C 1/06, B60N 2/02

(54) **Arbre flexible à fil d'ame à élasticité reduite**

(30) Priorité: 06.06.2003 FR 0306870; 25.07.2003 FR 0309157
(71) Demandeur: Inderflex-Technoflex, 77820 Le Châtelet en Brie (FR)
(72) Inventeur: Tores, Denis, 77350 Vaux le Penil (FR)
(74) Mandataire: Geismar, Thierry

(57) **Abrégé**

L'invention concerne un arbre flexible destiné à tourner à l'intérieur d'une gaine pour la transmission d'un mouvement de rotation, ledit arbre comprenant au moins un fil d'âme (2) et des fils d'enroulement (3) enroulés autour dudit fil d'âme, le fil d'âme (2) présentant une élasticité et une résilience inférieures à celles des fils d'enroulement (3).

L'invention concerne également un dispositif de transmission d'un mouvement de rotation comprenant un tel arbre et un système de réglage pour siège de véhicule automobile comprenant un tel dispositif.

## Description

L'invention concerne un arbre flexible pour la transmission d'un mouvement de rotation, un dispositif de transmission d'un mouvement de rotation comprenant un tel arbre flexible et un système de réglage pour siège de véhicule automobile comprenant un tel dispositif.

On connaît des dispositifs de transmission qui comprennent un arbre flexible et une gaine à l'intérieure de laquelle est logé l'arbre. En particulier, l'arbre flexible peut être formé d'un ou plusieurs fils d'âme en acier sur lesquels sont enroulés des fils d'enroulement, en acier également.

Dans ces dispositifs de transmission, notamment pour le réglage de siège pour véhicule automobile, les vitesses de rotation de l'arbre flexible dans la gaine sont supérieure à 2000 tours/minute, classiquement de l'ordre de 3000 tours/minute.

Lors de la rotation à de telles vitesses, il apparaît des vibrations de faible amplitude qui se propagent le long de l'arbre flexible et provoquent un bruit. Des études menées par la demanderesse ont montré que l'une des causes de l'apparition de ces vibrations est l'élasticité et la résilience trop importantes du ou des fils d'âme en acier employés pour réaliser l'arbre flexible.

L'invention vise à palier ce problème en proposant un arbre flexible dont le ou les fils d'âme présentent une élasticité et une résilience plus faibles tout en préservant une bonne tenue mécanique.

En effet, la demanderesse a constaté que le fil d'âme n'a pas pour fonction de transmettre le couple de rotation mais de servir de support pour les fils d'enroulement. Ainsi on peut réduire l'élasticité et la résilience du fil d'âme tout en préservant les performances de l'arbre flexible. Ces performances sont préservées grâce à la bonne tenue mécanique du fil d'âme. En effet, cette tenue mécanique permet d'assurer un bon support pour les fils d'enroulement en acier qui transmettent le couple de rotation. Ainsi, la combinaison d'un fil d'âme ayant une faible élasticité et des fils d'enroulement élastiques permet d'obtenir une réduction du phénomène de vibration et préservant les performances de l'arbre flexible.

A cet effet et selon un premier aspect, l'invention concerne un arbre flexible destiné à tourner à l'intérieur d'une gaine pour la transmission d'un mouvement de rotation, ledit arbre comprenant au moins un fil d'âme et des fils d'enroulement enroulés autour dudit fil d'âme, le fil d'âme présentant une élasticité et une résilience inférieures à celles des fils d'enroulement.

Selon un deuxième aspect, l'invention concerne un dispositif de transmission d'un mouvement de rotation comprenant une gaine et un arbre flexible logé à l'intérieur de la gaine, la gaine comprenant une âme formée d'un cylindre creux dont le diamètre intérieur est agencé pour permettre la rotation dudit arbre à l'intérieur de ladite gaine, l'arbre flexible étant un arbre tel que décrit ci-dessus.

Selon un troisième aspect, l'invention concerne un système de réglage pour siège de véhicule automobile, comprenant au moins une glissière de réglage montée sur la structure du véhicule et des moyens réglables de fixation du siège sur ladite glissière, ledit système comprenant en outre un moteur d'entraînement disposant d'au moins une sortie tournante, ledit système de réglage comprenant en outre un dispositif de transmission tel que décrit ci-dessus, qui est disposé entre la sortie dudit moteur d'entraînement et lesdits moyens de fixation, de sorte à déplacer lesdits moyens de fixation le long de ladite glissière de réglage en réponse à une rotation de ladite sortie.

D'autres objets et avantages de l'invention apparaîtront au cours de la description qui suit, faite en référence aux dessins annexés.

La figure 1 est une vue schématique en coupe d'un arbre flexible selon l'invention montrant le fil d'âme autour duquel on enroule les fils d'enroulement.

La figure 2 est une vue schématique partielle en coupe longitudinale d'un dispositif de transmission de rotation.

La figure 3 est une vue schématique en perspective d'un système de réglage pour le siège de véhicule selon l'invention.

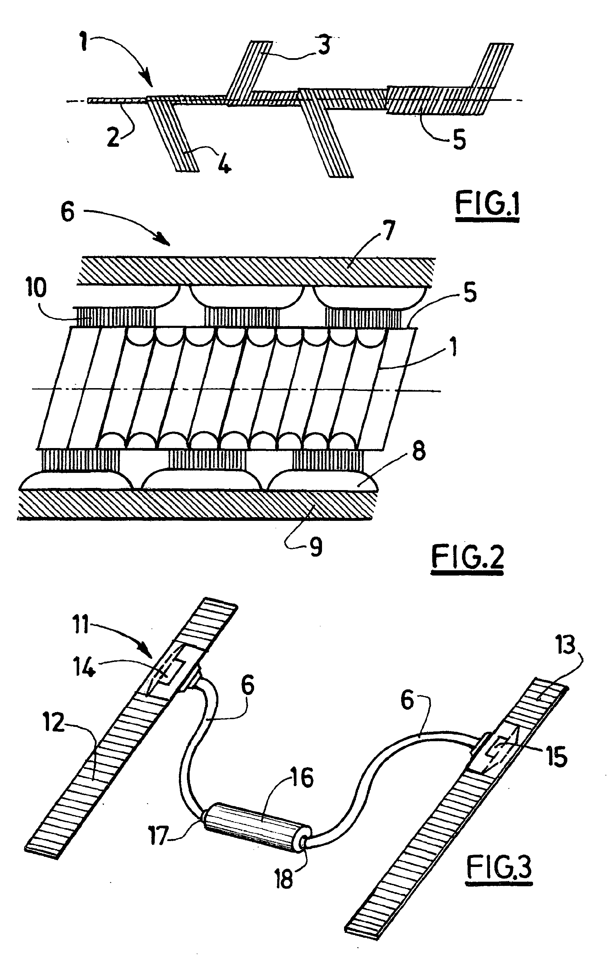

En référence à la figure 1, l'arbre flexible 1 comprend un fil d'âme 2 autour duquel sont enroulés des fils d'enroulement 3. On peut également prévoir plusieurs fils d'âme torsadés entre eux.

Le fil d'âme 2 est réalisé en un fil en cuivre ou en laiton recuits présentant de faibles caractéristiques d'élasticité et de résilience tout en ayant de bonnes caractéristiques mécaniques telle que la résistance à l'écrasement, à la pliure même après un traitement thermique à 400°C qui peut être effectué pour obtenir les performances mécaniques souhaitées pour transmettre un couple de rotation.

On peut également utiliser d'autres matériaux présentant des caractéristiques d'élasticité, de résilience et de tenue mécanique similaires à celles du cuivre ou du laiton recuits pour réaliser le fil d'âme 2. En variante, on peut envisager d'utiliser un même matériau pour le fil d'âme 2 et pour les fils d'enroulement 3. Un tel matériau subit un traitement différent suivant qu'il est destiné à un fil d'âme ou à un fil d'enroulement afin d'obtenir les caractéristiques souhaitées d'élasticité, de résilience et de tenue mécanique.

Les fils d'enroulement 3 sont des fils d'acier, ce qui permet d'assurer les performances voulues de l'arbre flexible 1. Ces fils sont par exemple disposés de façon à former une bande de fils 4 que l'on enroule autour du fil d'âme 2. On peut envisager d'enrouler une ou plusieurs bandes 4 autour du fil d'âme 2 en fonction du diamètre et des caractéristiques mécaniques que l'on désire conférer à l'arbre flexible 1. On peut notamment superposer plusieurs bandes 4 les unes au dessus des autres autour du fil d'âme 2.

Ainsi, le fil d'âme 2 présente une élasticité et une résilience inférieures à celles des fils d'enrobage 3 tout en conservant une bonne tenue mécanique. Comme indiqué plus haut, la combinaison d'un fil d'âme ayant une faible élasticité et de fils d'enroulement élastiques permet de réduire le phénomène de vibration tout en préservant les performances de l'arbre 1 en terme de transmission d'un couple de rotation.

Les fils d'enroulement 3 sont par exemple enroulés de façon hélicoïdale autour du fil d'âme 2.

Un tel enroulement produit des reliefs sur la surface extérieure 5 de l'arbre flexible 1. Ces reliefs peuvent être supprimés par un usinage de l'arbre flexible 1, de façon à ce que sa surface extérieure 5 soit sensiblement lisse. Cet usinage permet de réduire encore les vibrations de l'arbre flexible 1 lorsqu'il tourne à grande vitesse à l'intérieur d'une gaine.

En référence à la figure 2, on décrit maintenant un dispositif 6 de transmission d'un mouvement de rotation comprenant un arbre flexible 1 tel que décrit ci-dessus.

Un tel dispositif de transmission d'un mouvement de rotation 6 comprend un arbre flexible 1 et une gaine 7. L'arbre 1 est logé dans la gaine 7 dont le diamètre intérieur est prévu pour permettre la rotation de l'arbre 1 dans la gaine 7.

Les vitesses de rotation de l'âme sont classiquement d'environ 3000 tours/minute. Pour permettre une rotation à cette vitesse, un jeu de quelques dixièmes de millimètre est prévu entre l'arbre flexible 1 et la gaine 7.

En outre on peut prévoir une substance lubrifiante à l'intérieur de la gaine 7 de sorte à faciliter la rotation de l'arbre 1 à l'intérieur de celle-ci. Dans le cas où l'arbre 1 est usiné de façon à présenter une surface extérieure 5 sensiblement lisse, on évite le phénomène de vis d'Archimède entraînant un déplacement de la substance lubrifiante lors de la rotation de l'arbre à l'intérieur de la gaine 7.

La gaine 7 comprend une âme 8 et une enveloppe tubulaire extérieure 9 enrobant l'âme 8. L'âme 8 peut par exemple être formée d'un ressort hélicoïdal en matériau métallique. Ce ressort est par exemple formé à partir d'une bande métallique enroulée en hélice. Les spires du ressort sont non-jointives ce qui confère une flexibilité à la gaine 7. L'enveloppe extérieure 9 peut être réalisée en une matière plastique extrudée, par exemple du PVC.

L'âme 8 de la gaine 7 peut comprendre un flocage 10 sur sa surface intérieure, c'est à dire sur la surface en regard de l'arbre flexible 1.

Pour ce faire, la surface intérieure de l'âme 8 est revêtue par tout procédé connu, par exemple par voie électrostatique, d'un flocage 10 qui peut comprendre des fibres polyamides 6.6.

En effet, on a pu observer qu'un tel agencement dans lequel la gaine 7 est floquée intérieurement présentait un amortissement sonore optimal. Le flocage 10 permet d'assurer un isolement mécanique entre l'arbre 1 et la gaine 7.

Selon une variante non représentée, le même effet d'amortissement sonore peut être obtenu en utilisant un fil d'âme 2 de faibles élasticité et résilience dans un arbre flexible 1 dont la surface extérieure est recouverte d'un flocage.

En référence à la figure 3, on décrit maintenant un système de réglage de siège automobile 11 comprenant un dispositif de transmission d'un mouvement de rotation 6 tel que décrit ci-dessus.

Un tel système de réglage 11 comprend deux glissières 12 et 13 fixées par tout moyens convenables sur la structure non représentée d'un véhicule automobile. Ces glissières présentent des crans de réglage dont la fonction sera décrite ci-après.

Les glissières 12 et 13 supportent l'armature d'un siège, également non représentée, du véhicule, dont le déplacement et la fixation par rapport aux glissières sont assurés par des moyens réglables tels que des réducteurs 14 et 15 respectivement munis de roues dentées coopérant avec les crans précités des glissières 12 et 13.

Un moteur électrique 16 est fixé à la structure du véhicule ou, en variante, à l'armature du siège. Ce moteur 16 possède deux sorties tournantes 17 et 18. Ces sorties 17 et 18 sont reliées par des dispositifs de transmission d'un mouvement de rotation 6 selon l'invention aux réducteurs 14 et 15 respectivement.

Lorsque le moteur 16 est alimenté, il entraîne les arbres flexibles 1 des dispositifs de transmission 6 en rotation à l'intérieur de leurs gaines 7. Ces arbres 1 entraînent à leur tour les réducteurs 14 et 15 ce qui a pour effet de déplacer le siège le long des glissières 12 et 13.

## Revendications

1. Arbre flexible destiné à tourner à l'intérieur d'une gaine pour la transmission d'un mouvement de rotation, ledit arbre comprenant au moins un fil d'âme (2) et des fils d'enroulement (3) enroulés autour dudit fil d'âme, ledit arbre étant **caractérisé en ce que** le fil d'âme (2) présente une élasticité et une résilience inférieures à celles des fils d'enroulement (3).

2. Arbre flexible selon la revendication 1, **caractérisé en ce que** le fil d'âme (2) et les fils d'enroulement (3) sont réalisés en des matériaux différents.

3. Arbre flexible selon la revendication 2, **caractérisé en ce que** le fil d'âme (2) est un fil d'un matériau choisi parmi le cuivre et le laiton recuits.

4. Arbre flexible selon l'une des revendications 1 à 3, **caractérisé en ce que** les fils d'enroulement (3) sont des fils d'acier.

5. Arbre flexible selon l'une des revendications 1 à 4, **caractérisé en ce que** les fils d'enroulement (3) se présentent sous la forme d'au moins une bande (4) de plusieurs fils d'enroulement, ladite bande étant enroulée de façon hélicoïdale autour du fil d'âme (2).

6. Arbre flexible selon la revendication 5, **caractérisé en ce que** plusieurs bandes (4) de fils d'enroulement sont superposées les unes au dessus des autres autour du fil d'âme (2).

7. Arbre flexible selon l'une des revendications 1 à 6, **caractérisé en ce que** la surface extérieure (5) de l'arbre (1) est usinée de façon à présenter un état de surface sensiblement lisse.

8. Arbre flexible selon l'une des revendication 1 à 6, **caractérisé en ce que** la surface extérieure (5) de l'arbre (1) est munie d'un flocage.

9. Dispositif de transmission d'un mouvement de rotation comprenant une gaine (7) et un arbre flexible (1) logé à l'intérieur de la gaine (7), la gaine comprenant une âme (8) formée d'un cylindre creux dont le diamètre intérieur est agencé pour permettre la rotation dudit arbre à l'intérieur de ladite gaine, ledit dispositif étant **caractérisé en ce que** l'arbre flexible (1) est un arbre selon l'une des revendications 1 à 8.

10. Dispositif de transmission selon la revendication 9, **caractérisé en ce que** l'âme (8) de la gaine (7) est formée d'un ressort hélicoïdal en matériau métallique.

11. Dispositif de transmission selon l'une des revendications 9 ou 10, **caractérisé en ce que** la gaine (7) comprend en outre une enveloppe tubulaire (9) extérieure en matière plastique qui enrobe l'âme (8).

12. Dispositif de transmission selon l'une des revendications 9 à 11, **caractérisé en ce qu'**une substance lubrifiante est disposée à l'intérieur de la gaine (7).

13. Dispositif de transmission selon l'une des revendications 9 à 12 lorsqu'elles dépendent de la revendication 8, **caractérisé en ce que** la gaine (7) est souple et en matériau plastique, sa surface intérieure étant lisse.

14. Dispositif de transmission selon l'une des revendications 9 à 12, **caractérisé en ce que** l'âme (8) de la gaine (7) est munie sur sa surface intérieure d'un flocage (10).

15. Système de réglage pour siège de véhicule automobile, comprenant au moins une glissière de réglage (12, 13) montée sur la structure du véhicule et des moyens réglables (14, 15) de fixation du siège sur ladite glissière (12, 13), ledit système comprenant en outre un moteur d'entraînement (16) disposant d'au moins une sortie tournante (17, 18), ledit système de réglage étant **caractérisé en ce qu'**il comprend en outre un dispositif de transmission (6) selon l'une quelconque des revendications 8 à 14, qui est disposé entre la sortie (17, 18) dudit moteur d'entraînement et lesdits moyens de fixation, de sorte à déplacer lesdits moyens de fixation le long de ladite glissière de réglage en réponse à une rotation de ladite sortie.
